# EUROPEAN PATENT SPECIFICATION

(11) **EP 2 519 015 B1**
(45) Date of publication and mention of the grant of the patent: **08.05.2019**
(21) Application number: 12460019.8
(22) Date of filing: 27.04.2012
(51) Int. Cl.: H04M 11/06

(54) **Method of tagging signals used for leakage detection and measurement in xDSL data transmission networks and apparatus for detection and/or measurement of leakage sources tagged with this method**
Verfahren zum Markieren von Signalen, die bei der Leckdetektion und -messung in xDSL-Datenübertragungsnetzen verwendet werden, sowie Vorrichtung zur Detektion und/oder Messung von mit diesem Verfahren markierten Leckquellen
Procédé d`étiquetage de signaux utilisés pour la détection des fuites et la mesure dans les réseaux de transmission de données xDSL et appareil pour la détection et/ou mesure des sources de fuites étiquetées grâce à ce procédé

(30) Priority: 30.04.2011 PL 39472411
(43) Date of publication of application: 31.10.2012
(73) Proprietor: Kabelkom Spolka z o.o., 43-300 Bielsko-Biala (PL)
(72) Inventor: Wojciech, Sala, 43-300 Bielsko-Biala (PL); Jaroslaw, Szostka, 61-493 Poznan (PL)
(74) Representative: Golebniak, Andrzej

(56) References cited:
- US-A- 6 118 975
- US-A1- 2003 022 645
- US-B1- 6 307 593
- US-B1- 6 310 646

## Description

The present invention relates to a method of tagging signals used for leakage detection and measurement in data transmission networks as well as apparatus for the detection and/or measurement of leakage sources tagged with this method.

Digital subscriber loop technology (xDSL) is used for information transmission over a subscriber (local) loop. The loop connects a subscriber's terminal endpoint (TE), installed at home or in the office, with a telecommunications provider's central office (CO) serving the terminal endpoint. Typically, a subscriber loop is a symmetric transmission line made of an ushielded pair of twisted copper wires. Many of currently used subscriber loops have been designed for analog phone services (POTS - Plain Old Telephone Service). With the xDSL technology, such a loop can be used for fast data transmission, access to the Internet and other multimedia services. The transmission speed can reach a few dozen Mb/s depending on the xDSL technology variant. The letter "x" stands for the technology variant, e.g., ADSL, VDSL or HDSL. Some of these technologies have been described in technical standards defining such parameters as modulation or bandwidth.

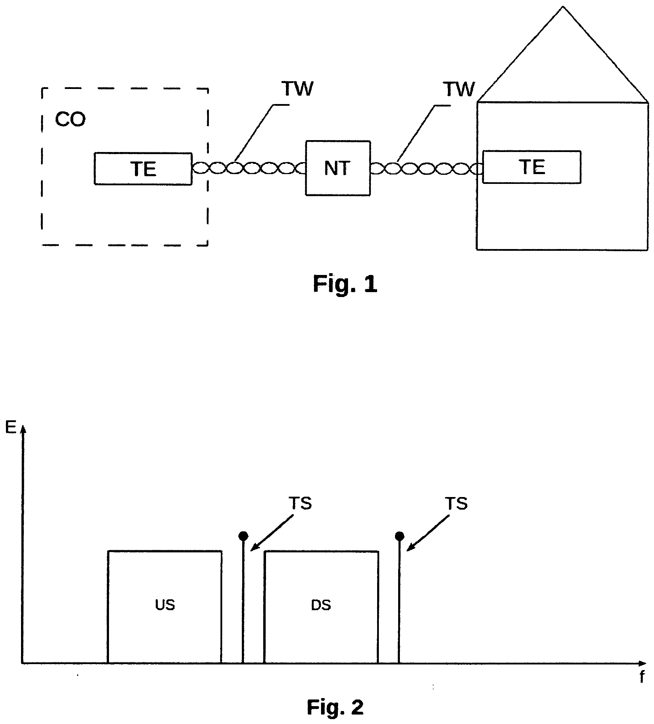

The spectrum of xDSL signals may occupy a bandwidth up to 30 MHz (VDSL2; this limit can be increased in the future). This broad spectrum shares frequency allocation with conventional radio communication systems (AM broadcasting) and radio amateurs. One of the problems faced by the xDSL system operators is signal leakage, which is undesirable electromagnetic radiation from a transmission line. An unshielded transmission line shown in FIG. 1, which is a twisted pair of wires, generates relatively high electromagnetic radiation. Currently, shielded twisted pair cables are often used. The shield of such cables can be damaged and such a damage can increase the radiation level. An additional source of leakage can be unloaded network branches, corroded or damaged connectors, bad quality or damaged network splitters or network modifications done by unqualified persons. The signals escaping from an xDSL network can undesirably interfere with terrestrial radio communication systems, causing problems with signal reception (e.g., interfered AM broadcasting on long, medium or short waves). Moreover, each discontinuity radiating the electromagnetic energy from an xDSL network forms a receiving antenna through which energy from terrestrial transmitters and other radio frequency sources (so called ingress) can enter the network. Most of leakage sources are also ingress sources. Ingress deteriorates the quality of the signals propagating in a xDSL network, reducing the transmission speed or the distance between a subscriber terminal and CO.

The above mentioned phenomena are the main reasons of leakage detection and measurement in xDSL networks.

Leakage control is vital for xDSL operators. In some countries there are regulations imposing radiation limits on xDSL networks. The Electromagnetic Compatibility (EMC) Directive 2004/108/EU, legally binding the member countries of European Union, comprises fixed telecommunication networks. Network operators should detect all leakage sources, determine the localization of leakage points, measure their absolute magnitude, and fix the sources which radiate stronger than a specified leakage limit.

A meter or detector for leakage measurement from xDSL networks should consist of an antenna and a receiver that is tuned to a frequency (referred as a test frequency) in the xDSL signal bandwidth. Such a device usually has a signal strength (the absolute value of the electric field intensity) measurement circuit. A typical method of leakage source detection requires a signal strength measurement on the test frequency. If the signal strength measurement circuit detects a relatively large amplitude signal at a particular location, a leak may be indicated in or near that localization. A technician may use a leakage detector to pinpoint the source of a leak. A corrective action may be taken to remove the leak source from the network.

Establishing one frequency of a xDSL signal, which would be transmitted continuously with constant amplitude, is a big problem. It makes impossible to assess the absolute leakage amplitude (electric field intensity). Moreover, the drawback of the method of leakage detection based on the measurement of the chosen frequency in the xDSL signal spectrum is its inability to distinguish between leakage radiated by the tested xDSL system and other signals present in the same frequency band. For example, the detected signal can be radiated by terrestrial transmitters, other radio frequency sources or xDSL networks placed in the same area and belonging to other operators. Another drawback of the method would be the necessity of xDSL signal modification in order to tag it. Such a modification could negatively affect the signal quality.

So far, the methods of tagging leakage signals from xDSL networks are unknown. On the market one can find very few devices for measurement leakage from xDSL networks. An example of such device is the HST-3000C meter manufactured by JDSU, USA. The meter has a spectrum analyzer. During the leakage measurement, the spectrum analyzer is in the Span Zero mode and analyzes the received signals in the time domain. The received signal is considered as a leak when the meter recognizes (automatically or by a technician - depending on the operation mode) that the signal in the time domain has a pattern typical for a xDSL system. The described method is not effective when other xDSL networks belonging to various operators have been deployed in the same area. The described method of leakage detection does not allow to unambiguously determine the network from which the leak comes from.

The methods of leakage detection and measurement in cable TV networks (CATV) using coaxial cables are commonly known. The U.S.A. patents US 6,310,646 and US 6,307,593 can be good examples. Both patents describe the method of tagging leakage signals from CATV networks. However, these methods cannot be applied for xDSL networks, because they are based on the specific features of the analog TV signal. Moreover, both methods modify the useful (carrying information) signal transmitted in CATV networks, so they can decrease the quality of received signals. The US 6,118,975 patent describes leakage tagging in CATV networks by means of the tagging signal inserted into the network. The tagging signal has a very broadband frequency spectrum and requires one unused 8 MHz TV channel. Such a tagging signal used in any xDSL network would substantially deteriorate signal parameters and would interfere with the useful signals transmitted in the network. The US 2003/0022645 A1 patent application describes the method of leakage detection and measurements in CATV networks which neither modifies the useful signal, nor inserts an additional tagging signal. Thus, it is not possible to differentiate leakage sources from various networks operating in the same area. This method, however, is based on some specific features of the analog TV signal and cannot be used in xDSL networks, either.

Accordingly, there is a need to develop a leakage tagging method that does not modify the signals transmitted in a xDSL network, does not decrease the reception quality in subscriber terminals and is not susceptible (at least to a certain extent) to interfering signals coming from other sources of electromagnetic energy. The method should also allow accurate measurement of the leak absolute magnitude.

According to the present invention, the method of tagging the signals used for leakage detection and/or measurement in networks with digital subscriber loops (xDSL) using additional signals transmitted in these networks and carrying the tagging information is based on placing a narrowband tagging signal (or signals) in chosen parts of the frequency spectrum which are close to the spectrum occupied by the xDSL signals transmitted in a network.

The tagging signal (or signals) is narrowband, with the bandwidth being smaller than 20 kHz.

The apparatus for leakage detection and/or measurements from xDSL networks, tagged according to the method presented in the invention, which uses the principle of signal reception based on frequency conversion, has a narrowband filter (or filters) with a bandwidth smaller than 20 kHz for the separation of the tagging signals. The filter output is connected with the microprocessor input. The microprocessor is connected with an antenna switch, an amplifier, a voltage controlled generator, a display and a keyboard and has been programmed for sampling and quantizing of the input signal and for the detection of the spectrum components carrying the tagging information.

The microprocessor uses the fast Fourier transform (FFT) or the discrete cosine transform (DCT) algorithm.

The innovation of the present invention lies in the placement of a tagging signal within the bandwidth which is in close proximity of the bandwidth occupied by a digital signal used for the transmission of services in a xDSL network. The tagging signals can be inserted by means of an external generator, so called a tagger, or can be created in the terminal end-point by means of the modified firmware of the terminal. At both ends of the bandwidth occupied by a xDSL signal, there are always free frequency bands. There is no useful energy (coming from the modulation process) generated by xDSL equipment and transmitted in these bands. If a narrowband tagging signal (or signals) are placed in the free bands, the xDSL signal quality will be unaffected. The tagging signal or signals will propagate in a transmission line together with the xDSL signal.

According to the present invention, any narrowband signal with any type of analog or digital modulation can be used as a tagging signal. For example, a tagging signal can be a sinusoidal wave which is modulated with amplitude. The modulation frequency is low, in the range from 1 to 50 Hz, in order to minimize the bandwidth occupied by the signal. The usage of a sinusoidal wave simplifies the measurement of the absolute magnitude of the leakage by a leakage meter or detector. The narrowband tagging signal (not only sinusoidal) can be extracted in the leakage meter or detector by means of, for example, the fast Fourier transform (FFT), the discrete cosine transform (DCT), or a very narrow bandpass filter, which attenuates the spectrum of the signals not lying in the tagging signal band. The narrowband tagging signal substantially improves the accuracy of leakage magnitude measurements. The above described sinusoidal signal with amplitude modulation is one possible form of the tagging signal.

A greater number of tagging signals, which can be used in the methods described herein, increases the leakage meter/detector immunity to interfering signals and reduces the likelihood that the detected leak comes from a network other than the network under test.

The advantage of the invention is the possibility of fast and effective leakage and ingress source localization. It simplifies maintaining the high quality of signals transmitted in xDSL networks.

Embodiments of the present invention will now be described, by way of example, with reference to the accompanying drawings in which:
FIG. 1 is a typical configuration of a xDSL network using a twisted pair of wires for signal transmission;
FIG. 2 is an example of placing the narrowband tagging signal TS in close proximity of the spectrum occupied by a xDSL signal;
FIG. 3 is a block diagram of a typical xDSL system incorporating the signal tagging method according to the invention;
FIG. 4 is a block diagram of a leakage meter and/or detector leakage detection from a xDSL network which incorporates the method of signal tagging according to the invention.

A typical system of a digital subscriber loop (xDSL), shown in Fig. 1, consists of the following parts: a communication node (central office - **CO**), belonging to a service provider, in which there is an end terminal **TE,** a transmission network made of a pair of twisted copper wires **TW,** an optional network terminal **NT,** and an end terminal **TE** placed at subscriber's home or office. The terminal **TE** provides conversion, modulation/demodulation, and data transmission/reception. The transmission line **TW** may have too high attenuation and this is why an optional device **NT** is sometimes used to amplify a signal, so the **TW** length can be extended.

Fig. 2 presents an exemplary frequency spectrum (distribution of energy **E** in terms of frequency **f)** of a xDSL signal. The spectrum consists of a **DL** part, which serves for transmission from a communication node **CO** to a subscriber's terminal **TE,** and an **UL** part for transmission in the reverse direction. A narrowband tagging signal **TS** may be placed in the spectrum part which separates **UL** from **DL** or above the whole band occupied by an xDSL signal. Due to better radiation it is advised to use higher frequencies for leakage tagging.

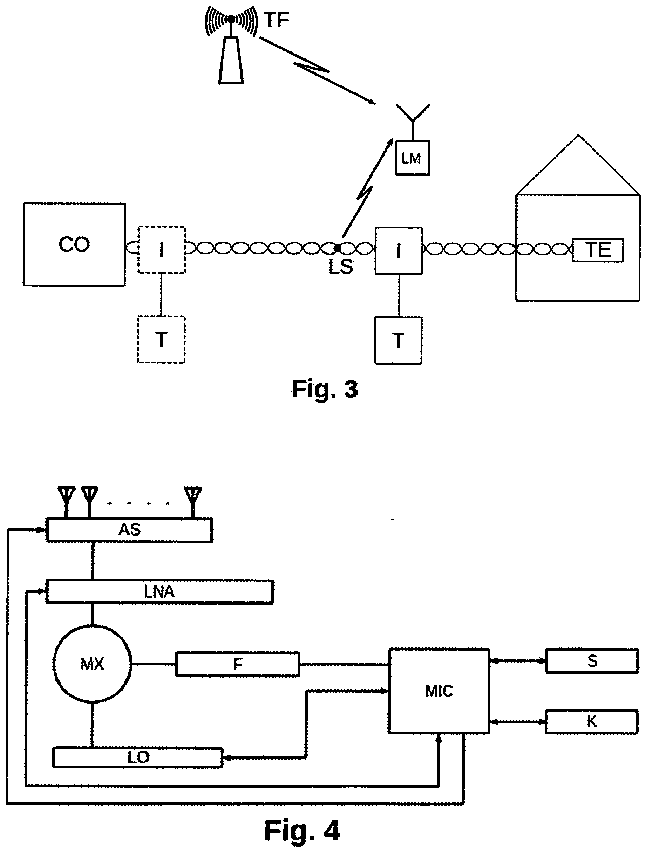

Fig. 3 presents a typical xDSL network with a tagger **T** installed for leakage tagging using the method according to the invention. The tagging signal is inserted into the network via an inserter (coupling device) **I** which can be close to a subscriber's terminal or a communication node **CO** (marked with a dashed line). A leakage source **LS** radiates electromagnetic energy which is received by a leakage meter **LM.**

Assuming that there is an interference source radiating the signal on exactly the same frequency **TF** as the frequency generated in the tagger **T,** the leakage meter **LM** can receive the interfering signal. However, the interfering signal does not contain the tagging information, so the received signal will not be recognized as a leak from the network under test.

The process of leakage detection using the method according to the invention is as follows. The tagger **T** is connected to that part of a xDSL network which requires testing or is suspected as radiating excessive leakage. The choice of the suspected part of a network can be based on an earlier measurement of a power level which has given higher levels above the noise floor in the part of the spectrum used for data transmission in this network. Such a measurement can be done during a mobile patrol with a car antenna and a spectrum analyzer which can be built in a leakage meter/detector or be a stand-alone device. After switching on a tagging signal, a technician performs a mobile patrol, during which he determines geographical coordinates of the places where a leakage meter or detector has detected the tagging signal from the network under test with the amplitude higher than the established limit. In the next step, the technician exactly localizes the leak sources and fix them during a pedestrian patrol.

FIG. 4 presents a block diagram of the leakage meter and/or detector which uses the method of signal tagging according to the invention. The apparatus for leakage measurement and/or detection according to the method described herein has good sensitivity, dynamic range and the detection ability of tagging signals. There is an antenna switching circuit **AS** at the input of the apparatus. The meter and/or detector has a built-in internal antenna and allows for the connection of external measurement antennas (e.g., kept in hand or placed on a vehicle roof). The signal received by the antenna is amplified in the input low noise amplifier **LNA.** The amplified signal appears at the input of the mixer **MX.** The second input of the mixer is connected to the variable local oscillator **LO.** The mixer **MX** shifts the input signal on the frequency axis by the frequency of the local oscillator signal. The signal at the mixer output has the frequency lying within the bandwidth of the narrowband filter **F** (the bandwidth is from a few kHz up to several kHz). The filter **F** attenuates all the signals lying outside the narrow band with the tagging signal and coming from the xDSL network under test, other networks or terrestrial sources which can interfere with the tagging signal. The parameters of the filter **F** (bandwidth, frequency response slope) have substantial influence on the correct detection and measurement of the leaking signal. The output signal of the filter **F** enters the input of the microprocessor **MIC.** The microprocessor **MIC** has control functions (it controls the antenna switch **AS,** the amplifier **LNA,** the oscillator **LO,** the screen **S,** and the keyboard **K**) and digitally processes the signals. The digital signal processing in the microprocessor **MIC** comprises sampling and quantization of the input signal as well as the recognition of the spectrum components carrying the tagging information. The detection of the spectrum components with the tagging information (introduced in the process of the narrowband modulation of the tagging signal in the tagger **T**) is based on the fast Fourier transform (FFT) algorithm. Due to this processing method, a very good sensitivity of tagging signal detection can be achieved. The microprocessor **MIC** also determines the amplitude of the received leakage signal. Information about the leak magnitude and the presence of the tagging signal is displayed on the screen of the apparatus. The usage of the microprocessor allows for the correction of the systematic errors. The correction values added to the measurement results are saved in the microprocessor memory during the periodical calibration of the meter/ detector.

An alternative example of the leakage meter/detector embodiment according to the invention has a different microprocessor program, which uses the discrete cosine transform (DCT) for detection of the spectrum components carrying the tagging information. The high sensitivity of the tagging signal detection has also been achieved.

## Claims

1. A method of tagging signals used for leakage detection and/or measurement in data transmission networks with a digital subsriber loop xDSL, using the additional signals transmitted over these networks and carrying the tagging information, **characterized in that** a narrowband tagging signal or signals with the bandwidth smaller than 20 kHz are placed in unused part(s) of the xDSL signal frequency spectrum or in the proximity of the xDSL signal frequency spectrum.

2. The method of claim 1 **characterized in that** the narrowband tagging signal with a bandwidth smaller than 20 kHz is used.

3. An apparatus for the detection and/or measurement of leakage sources from the data networks with a digital subscriber loop xDSL tagged with the method according to claim 1, which uses the frequency conversion reception of signals, having narrowband filter or filters for tagging signal extraction, **characterized in that** each of its narrowband filters **(F)** has a bandwidth smaller than 20 kHz, and the filter output is connected to the microprocessor **(MIC)** input; the microprocessor **(MIC)** is also connected to the antenna switch **(AS),** the amplifier **(LNA),** the variable frequency local oscillator **(LO),** the screen **(S)** and the keyboard **(K)** and is programmed for sampling and quantizing of the input signal and for the detection of the spectrum components carrying the tagging information.

4. An apparatus of claim 3 **characterized in that** its microprocessor **(MIC)** uses Fast Fourier transform, FFT.

5. The apparatus of claim 3, **characterized in that** its microprocessor **(MIC)** uses the discrete cosine transform, DCT.

## Patentansprüche

1. Verfahren zur Kennzeichnung der Signale zur Erkennung und/oder Messung von Leckstellen in Datenübertragungsnetzen mit digitaler xDSL-Teilnehmerschleife, unter Einsatz von zusätzlichen Signalen, die über diese Netze gesendet werden und Kennzeichnungsinformationen übertragen, **dadurch gekennzeichnet, dass** ein kennzeichnendes Schmalbandsignal bzw. -signale mit einer Bandbreite von weniger als 20 kHz in dem/den ungenutzten Teil(en) des Frequenzspektrums des xDSL-Signals oder in der Nähe des Frequenzspektrums des xDSL-Signals angeordnet wird/werden.

2. Verfahren nach Anspruch 1, **dadurch gekennzeichnet, dass** ein kennzeichnendes Schmalbandsignal mit einer Bandbreite von weniger als 20 kHz eingesetzt wird.

3. Gerät zur Erkennung und/oder Messung von Leckagequellen in Datennetzen mit digitaler xDSL-Teilnehmerschleife, die nach Verfahren nach Anspruch 1 gekennzeichnet ist, bei dem ein Empfang von Signalen mit Frequenzwandlung verwendet wird, mit einem Schmalbandfilter oder Filtern zur Trennung von kennzeichnenden Signalen, **dadurch gekennzeichnet, dass** jedes Schmalbandfilter (F) eine Bandbreite von weniger als 20 kHz hat und der Filterausgang mit dem Eingang eines Mikroprozessors (MIC) verbunden ist; der Mikroprozessor (MIC) ist auch mit einem Antennenumschalter (AS), einem Verstärker (LNA), einem lokalen Oszillator mit veränderbarer Frequenz (LO), einem Bildschirm (S) und einer Tastatur (K) verbunden sowie für die Entnahme von Proben und Quantisierung des Eingangssignals als auch Erkennung von Spektrumkomponenten, die kennzeichnende Informationen übertragen, programmiert.

4. Gerät nach Anspruch 3, **dadurch gekennzeichnet, dass** sein Mikroprozessor (MIC) die schnelle Fourier-Transformation (FFT) verwendet.

5. Gerät nach Anspruch 3, **dadurch gekennzeichnet, dass** sein Mikroprozessor (MIC) die diskrete Kosinustransformation (DCT) verwendet.

## Revendications

1. Le procédé de marquage de signaux utilisés pour la détection et/ou la mesure de fuite dans des réseaux de transmission de données avec boucle numérique xDSL, en utilisant des signaux supplémentaires transmis par ces réseaux et portant des informations de marquage, **caractérisé en ce que** le signal de marquage à bande étroite ou des signaux dont la largeur de bande est inférieure à 20 kHz sont placés dans la(les) partie(s) non utilisée(s) du spectre de fréquence xDSL ou à proximité du spectre de fréquence xDSL.

2. Le procédé présenté dans la première revendication **caractérisé en ce qu'**on utilise le signal de marquage à bande étroite dont la largeur de bande est inférieure à 20 kHz.

3. Le dispositif pour la détection et/ou la mesure de sources de fuite des réseaux de données avec boucle numérique xDSL marquée par un procédé présenté dans la première revendication, qui utilise la réception de signaux avec la conversion de fréquence, avec le filtre à bande étroite ou des filtres pour extraire les signaux de marquage, **caractérisé en ce que** chaque filtre à bande étroite (F) a une largeur de bande inférieure à 20 kHz, et la sortie du filtre est connectée à l'entrée du microprocesseur (MIC); le microprocesseur (MIC) est également connecté au commutateur d'antenne (AS), à l'amplificateur (LNA), à l'oscillateur local à fréquence variable (LO), à l'écran (S) et au clavier (K) et il est programmé pour échantillonner et quantifier le signal d'entrée et pour détecter des composantes spectrales portant des informations de marquage.

4. Le dispositif présenté dans la troisième revendication, **caractérisé en ce que** le microprocesseur (MIC) utilise la transformée de Fourier rapide FFT.

5. Le dispositif présenté dans la troisième revendication, **caractérisé en ce que** le microprocesseur (MIC) utilise la transformée en cosinus discrète DCT.
